# FASCICULE DE BREVET EUROPEEN

(11) **EP 0 591 054 B1**
(45) Date de publication et mention de la délivrance du brevet: **11.08.1999**
(21) Numéro de dépôt: 93402385.4
(22) Date de dépôt: 30.09.1993
(51) Int. Cl.: C09K 15/14, C08K 5/13

(54) **Utilisation, dans un matériau plastique, de la vanilline et de ses dérivés pour produire un effet de barrière au rayonnement ultra-violet**
Verwendung von Vanillin und seinen Derivaten in Kunststoffmaterialien zur Erzeugung einer Sperrwirkung für Ultraviolett-Strahlung
Use of vanillin and its derivates in plastic materials to produce a barrier effect to ultraviolet radiation

(30) Priorité: 02.10.1992 FR 9212174
(43) Date de publication de la demande: 06.04.1994
(73) Titulaire: Centre Technique Industriel dit: INSTITUT TEXTILE DE FRANCE, 92223 Bagneux Cédex (FR); Debras, Jean-Pierre, 69001 Lyon (FR)
(72) Inventeur: Chatelin, Roger, F-69380 Lissieu (FR); Gavet, Louis, F-69005 Lyon (FR); Bourgeots, Michel, F-69003 Lyon (FR); Caramaro, Laurence, F-69003 Lyon (FR); Debras, Jean-Pierre, F-69001 Lyon (FR); Couvret, Denis, F-69870 Grandris (FR)
(74) Mandataire: Hénnion, Jean-Claude

(56) Documents cités:
- EP-A- 0 074 620
- EP-A- 0 406 169
- US-A- 2 393 794
- US-A- 3 505 432
- US-A- 4 413 078
- DATABASE WPI Week 8425, Derwent Publications Ltd., London, GB; AN 84-154803 & JP-A-59 080 450 (MITSUBISHI PETROCHEM KK & TAGASAGO PERFUMERY KK) 9 Mai 1984

## Description

La présente invention concerne le domaine de la protection contre les radiations ultraviolettes. Elle concerne plus particulièrement un matériau plastique, susceptible de servir d'emballage de produits notamment alimentaires, et apte à protéger lesdits produits contre les effets néfastes de ces radiations.

On sait que l'ultraviolet est un rayonnement électromagnétique dont la fréquence est supérieure à celle du rayonnement violet et que l'oeil humain ne perçoit pas. Son domaine s'étend approximativement entre 400nm, qui est la limite commune avec le violet visible, et 10nm qui est la jonction avec les rayons X mous. On distingue l'ultraviolet proche dont la fréquence est comprise entre 400 et 300nm, l'ultraviolet moyen entre 300 et 200nm et l'ultraviolet lointain entre 200 et 10nm.

Les radiations ultraviolettes ont un pouvoir ionisant important, du fait de la valeur relativement élevée du quantum d'énergie des photons ultraviolets. Ce pouvoir ionisant explique les actions photo-électriques et photo-chimiques des radiations ultraviolettes, en particulier leurs effets destructeurs sur les molécules organiques complexes des êtres vivants et leur responsabilité dans les altérations physico-chimiques des composants dits photosensibles de nombreux produits.

Les agents anti-UV ont pour but d'assurer une protection contre les effets des radiations ultraviolettes, par exemple contre leur effet catalytique de l'oxydation.

S'agissant du domaine de la cosmétologie, l'agent anti-UV est un additif qui est inclus dans un mélange de composants par exemple sous forme de pâte, crème ou aérosol et qui est destiné à former une protection contre les effets néfastes du soleil sur la peau.

On connaît bon nombre de composés qui sont utilisés comme agents anti-UV. Le document GB.2.206.282 cite un grand nombre de composés connus pour être utilisés dans les écrans solaires pour la protection de la peau en tant qu'agents absorbant les radiations ultraviolettes. On distingue dans ce document des agents ayant plus particulièrement une action vis-à-vis des UV A, c'est-à-dire des radiations ultraviolettes dont la fréquence est comprise entre 400 et 320nm et ceux qui ont une action vis-à-vis des UV B c'est-à-dire des radiations ultraviolettes dont la fréquence est comprise entre 320 et 270nm.

S'agissant du domaine des matériaux plastiques, un agent anti-UV est un additif inclus dans la structure polymérique du matériau et capable d'absorber tout ou partie des radiations ultra-violettes qui sont susceptibles de dégrader ladite structure. Sa présence a pour but de protéger le matériau lui-même, dont les chaînes polymériques sont altérées par la lumière et plus particulièrement le rayonnement UV et donc d'éviter à terme une perte de résistance mécanique dudit matériau ou une décoloration.

Le domaine dans lequel se situe l'invention concerne un autre aspect de la protection anti UV. Il ne s'agit pas de protéger le matériau plastique en lui-même mais de protéger, contre les radiations UV, une zone située au-delà du matériau plastique et bien sûr tout produit placé dans cette zone. Le matériau plastique est par exemple un film servant d'emballage pour un produit alimentaire et préservant , par un effet de barrière au rayonnement UV, la bonne conservation des qualités organoleptiques dudit produit.

Le but que se sont fixés les demandeurs est de rechercher un composé qui, mis en oeuvre dans un matériau plastique, puisse conférer à celui-ci un effet de barrière ou d'écran contre le rayonnement UV, en particulier dans un matériau plastique qui puisse être utilisé comme film d'emballage de produits alimentaires.

Ce but est parfaitement atteint par l'utilisation, qui est faite selon l'invention, dans un matériau plastique de la vanilline ou de l'un de ses dérivés pour produire un effet de barrière contre le rayonnement ultra-violet.

Le mérite en revient aux demandeurs d'avoir retenu pour l'obtention de cet effet barrière des produits qui correspondent aux directives communautaires concernant les matériaux et objets en matière plastique destinés à entrer en contact avec les denrées alimentaires puisqu'ils sont déjà utilisés dans le domaine alimentaire et aussi dans le domaine de la parfumerie et de la pharmacie,mais principalement pour leurs propriétés odoriférantes.

On a déjà proposé par le document US.3,505,432 d'inclure des agents odoriférants dans des feuilles ou films de polyoléfine. Le procédé en question consistant à mélanger une première quantité de polyoléfine à l'état liquide avec une relativement importante proportion d'une composition odoriférante afin de former une masse fluable, puis à partir de ladite masse à réaliser des gouttes et à les solidifier ; les gouttes de polyoléfine ainsi solidifiées sont ensuite fondues avec une seconde quantité de polyoléfine plus importante que la première et le mélange fondu obtenu est solidifié. L'une des compositions odoriférantes décrite dans ce document comporte de la vanilline et l'éthylvanilline parmi un total de six autres ingrédients. Le but de ce procédé d'inclusion est d'obtenir une feuille ou un film de polyoléfine qui ait une odeur prononcée de vanille.

Certes le document EP 74620 a cité la vanilline , parmi bien d'autres composés tels que le 8-Hydroxyquinoline, l'ester de l'acide propylique gallique , comme pouvant être utilisée pour la stabilisation de matières pharmaceutiques et de préparations médicamenteuses photo-instables. Selon le procédé décrit, on mélange avec lesdites matières ou préparations photo-instables des substances qui sont compatibles sur le plan pharmacologique et qui possèdent un comportement à l'absorption voisin des matières médicamenteuses, en sorte de protéger spécifiquement les médicaments du déclenchement de la photo-instabilité, dans la plage spectrale de la lumière.

Dans cette composition, la vanilline est utilisée comme additif de photostabilisation, le seul but étant d'éviter la dégradation des médicaments sous l'effet de la lumière et notamment du rayonnement UV.

Ainsi, selon les demandeurs, face au problème de la protection des produits alimentaires sous emballage plastique , rien ne suggérait à l'homme du métier de mettre en oeuvre la vanilline ou l'un de ses dérivés dans un matériau plastique afin de procurer à celui-ci un effet de barrière contre le rayonnement UV, sachant que dans le film de polyoléfine du premier document la vanilline et l'éthylvanilline sont utilisés pour leurs seules propriétés odoriférantes et que dans les matières médicamenteuses du second document la vanilline est utilisée pour stabiliser les médicaments associés parcequ'ils ont une capacité d'absorption voisine de la vanilline. Dans ce dernier cas , il s'agit donc bien d'un effet d'autoprotection et non d'un effet de barrière.

C'est un autre objet de l'invention que de revendiquer l'utilisation précitée de la vanilline ou de l'un de ses dérivés en combinaison avec au moins un additif apte à modifier le spectre UV de ladite vanilline ou dudit dérivé, en déplaçant la zone de rupture d'absorption dans le visible.

Un tel additif est de préférence un colorant alimentaire, lorsqu'il s'agit d'un film plastique destiné à l'emballage de produits alimentaires.

C'est un autre objet de l'invention que de revendiquer un matériau plastique, présentant un effet de barrière au rayonnement ultra-violet, qui comporte d'une part, comme générateur de cet effet de barrière, au moins 0,1% en poids de vanilline ou de l'un de ses dérivés, et d'autre part un additif apte à modifier le spectre UV de ladite vanilline ou dudit dérivé, en déplaçant la zone de rupture d'absorption dans le visible.

L'efficacité de l'effet de barrière présenté par le matériau plastique est encore améliorée lorsque celui-ci comporte un additif apte à modifier le spectre UV de la vanilline ou du dérivé de la vanilline que ledit matériau contient, en déplaçant la zone de rupture d'absorption dans le visible.

Parmi les dérivés préférés de la vanilline, selon l'invention, on retiendra notamment l'ortho-vanilline qui confère un très bon effet barrière.

Par ailleurs , lorsqu'on veut que le matériau plastique n'ait pas une odeur prononcée, ou ait une bonne stabilité thermique tout en ayant un bon effet barrière, on retiendra l'aldéhyde syringique comme dérivé de la vanilline.

La présente invention sera mieux comprise à la lecture de la description qui va être faite d'exemples de réalisation de films plastiques comportant de la vanilline et plusieurs de ses dérivés comme agents conférant aux films plastiques un effet de barrière aux UV, illustrée par le dessin annexé dans lequel les différentes figures montrent sous forme de courbes les variations de la valeur de la réflexion et de la transmission en fonction de la longueur d'onde pour les matériaux réalisés selon les exemples décrits.

Les exemples ci-dessous ont pour but de faire ressortir l'effet de barrière aux UV qui est conférée aux films plastiques par la vanilline et de ses dérivés dont l'utilisation est revendiquée dans la présente demande.

Ils visent plus particulièrement la réalisation d'un film plastique destiné préférentiellement à l'emballage de produits alimentaires . On comprend que la présence de la vanilline ou de la plupart de ses dérivés dans un tel film va avoir comme effet secondaire de le rendre tout-à-fait reconnaissable par son odeur. Ceci peut être un avantage commercial recherché, puisque la vanilline est un produit qui est bien connu par le consommateur et que son odeur peut être considérée comme agréable.

Il est certain que l'effet de barrière au rayonnement UV conféré au film plastique par la vanilline ou l'un de ses dérivés n'est réellement perceptible qu'à une concentration suffisante de l'ordre de 0,1% en poids dans ledit film. Il en est différemment de l'utilisation de la vanilline comme agent odoriférant, en effet dans ce cas la présence d'une quantité de vanilline de l'ordre de quelques dizaines de ppm (parties par million) est tout-à-fait perceptible par le consommateur.

Il faut savoir que cette perception olfactive du consommateur reste cependant du même ordre même si la concentration en vanilline est beaucoup plus importante , de l'ordre du pour-cent ou de quelques pour cent.

Ainsi l'utilisation de la vanilline et de ses dérivés dans le film plastique, à des concentrations supérieures au pour cent , n'a pas de répercussion négative quant à ses propriétés odoriférantes.

### 1er exemple :

On réalise un film de polypropylène contenant 5% en poids de vanilline ou vanillal ou encore hydroxy 4 méthoxy 3 benzaldéhyde. Ce film est réalisé suivant les techniques classiques en plasturgie, notamment en mélangeant de manière homogène les granulés de polypropylène aux cristaux de vanilline , puis en effectuant une compression à chaud du mélange obtenu.

Il s'avère que la vanilline est tout-à-fait compatible avec le polypropylène lors de la fusion de celui-ci et n'est pas altérée de façon importante par la température qui est d'au moins 130°C, pendant une durée prolongée et 240°C pendant une courte durée.

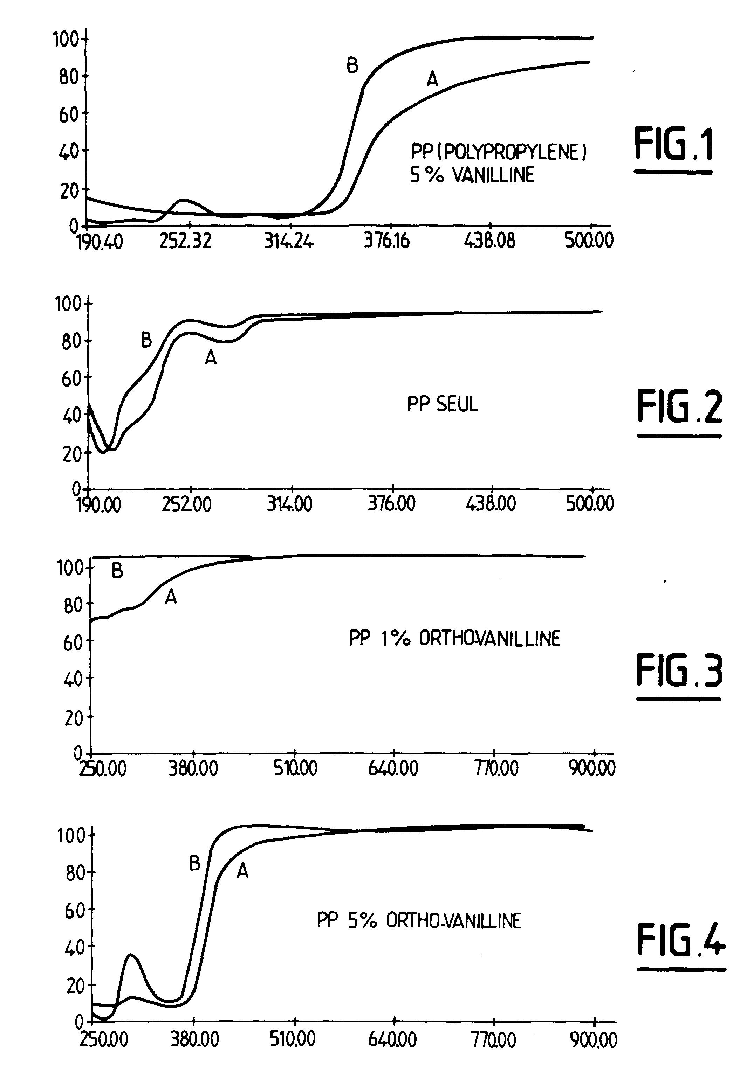

Des tests ont été réalisés sur un spectrophotomètre pour déterminer la réflexion (A) et la transmission (B) de ce film en fonction des différentes longueurs d'onde. Les résultats obtenus sont visualisés sur la figure 1. A titre de comparaison les mesures ont été effectuées sur un film témoin en polypropylène, de même épaisseur, à savoir de l'ordre de 0,02mm, totalement exempt de vanilline. Les résultats obtenus sont illustrés à la figure 2. Les courbes montrant la transmission (B) sont significatives de l'effet de barrière au rayonnement.

La comparaison de ces résultats permet de constater que la présence de vanilline à 5% en poids dans le film de polypropylène permet d'obtenir un effet de barrière aux UV grâce à une absorption très efficace des radiations jusqu'à une longueur d'onde de l'ordre de 400nm, c'est-à-dire jusqu'à la limite du visible. Cette absorption présente une décroissance entre 400 et 450nm environ. Au-delà de cette longueur d'onde, le film n'absorbe plus les radiations.

Le film de polypropylène comportant de la vanilline reste suffisamment translucide pour que le consommateur puisse voir très nettement le produit qui serait présenté dans un emballage plastique qui utiliserait ce film.

### 2ème exemple :

On a réalisé dans les mêmes conditions que ci-dessus un film de polypropylène en remplaçant la vanilline par l'ortho-vanilline.

Les figures 3 et 4 montrent les résultats obtenus de transmission (B) avec un film comportant respectivement 1% et 5% en poids d'ortho-vanilline ou hydroxy 2 méthoxy 3 benzaldéhyde.

De la comparaison de ces deux courbes, il ressort que la concentration en ortho-vanilline a une grande importance quant à l'effet de protection obtenu. A 1% d'ortho-vanilline, l'absorption des radiations UV existe mais dans des proportions faibles. Par contre à 5% l'effet de barrière aux UV est très significatif.

Par ailleurs de la comparaison des figures 1 et 4, il ressort que l'efficacité de l'effet de barrière du film contenant de l'ortho-vanilline est meilleure que celui contenant de la vanilline, la zone de rupture de l'absorption intervenant plus vers le visible.

### 3ème exemple :

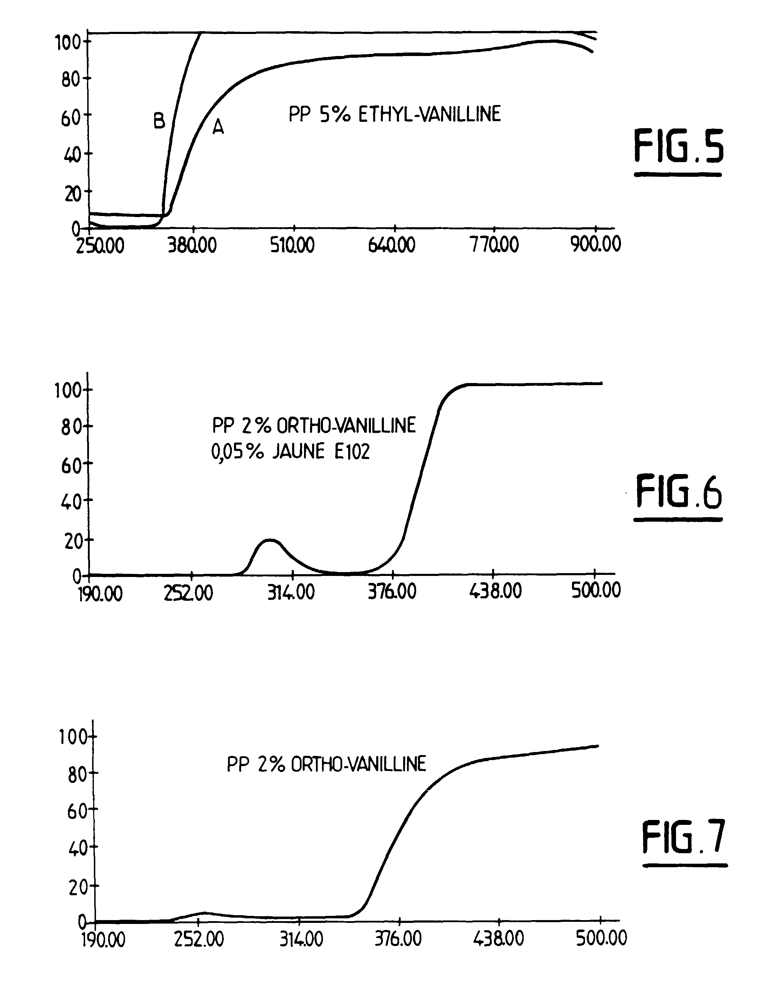

On a réalisé dans les mêmes conditions que ci-dessus, un film thermoplastique en polypropylène avec, comme dérivé de la vanilline, I'éthylvanilline ou éthoxy 3 hydroxy 4 benzaldéhyde à une concentration de 5% en poids. De la comparaison de la figure 5, et des figures précédentes, il ressort que ce dérivé de la vanilline présente une absorption des radiations ultraviolettes qui est moins efficace que la vanilline et l'ortho-vanilline. En effet la zone de rupture de cette absorption intervient entre 350 et 400nm, c'est-à-dire que l'effet de barrière n'est pas total dans la zone des U.V. proches du visible. Cependant l'avantage de l'éthyl-vanilline réside dans le fait que le film obtenu est plus transparent.

### 4ème exemple :

On a repris les conditions de l'exemple 2, mais avec un film de polypropylène ayant une épaisseur de 10 micromètres, et en ajoutant aux 2% en poids d'orthovanilline un additif qui est un colorant alimentaire de teinte jaune, à savoir le colorant jaune E 102 à raison de 0,05% en poids.

La figure 6 montre la courbe relative à la transmission de la lumière à travers le film obtenu en fonction des différentes longueurs d'onde. A titre de comparaison la courbe de la figure 7 montre la transmission du même film contenant uniquement 2% d'orthovanilline.

De la comparaison des figures 6 et 7, on constate que la présence de cet additif améliore l'efficacité de l'effet de barrière aux UV en déplaçant la zone de rupture d'absorption dans le visible.

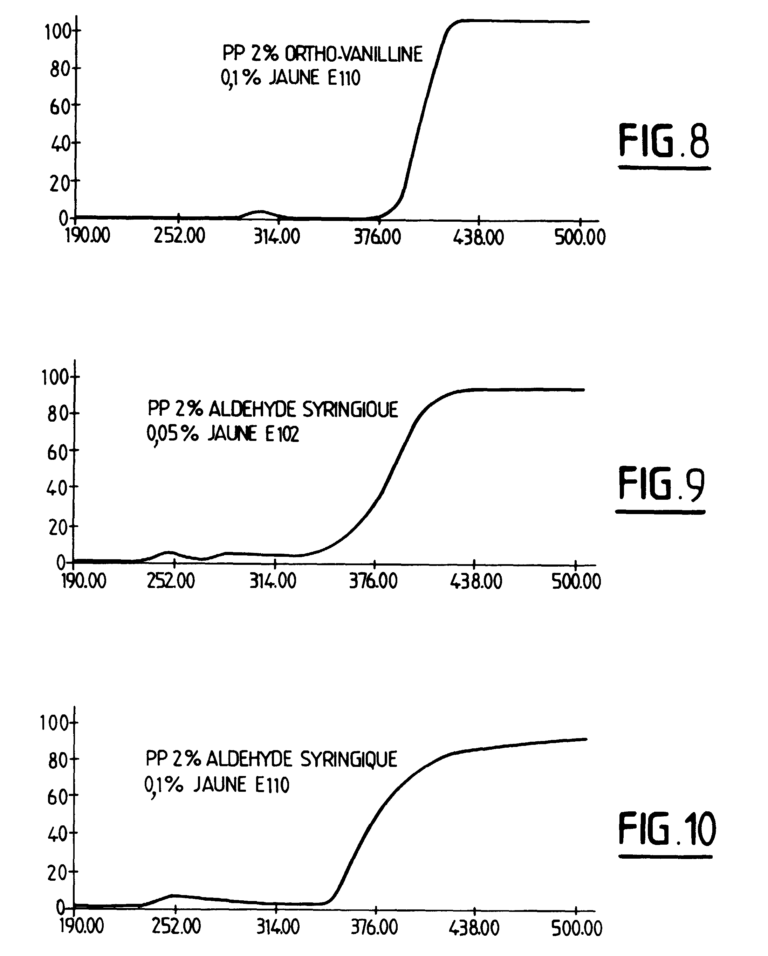

Un effet de barrière encore meilleur est obtenu en utilisant un autre colorant alimentaire, le jaune E 110 à raison de 0,1% en poids, comme cela ressort de l'examen de la figure 8.

Aux faibles concentrations , de l'ordre de 0,01 à 0,1% en poids, la présence du colorant n'altère pas la transparence du film et n'empêche donc pas le consommateur de voir le produit emballé dans le film, tout en obtenant l'effet recherché.

### 5ème exemple :

Les films plastiques décrits aux exemples précédents ont l'odeur caractéristique de la vanille. Ceci peut être un inconvénient majeur pour certaines applications. Parmi les dérivés non odoriférants de la vanilline, les demandeurs ont retenu plus particulièrement l'aldéhyde syringique. Il s'agit d'un dérivé qui possède un groupement méthoxy supplémentaire en méta du radical aldéhydique de la vanilline.

Les figures 9 et 10 montrent les courbes de transmission d'un film de polypropylène contenant 2% d'aldéhyde syringique avec respectivement 0,05% de jaune E 102 pour la figure 9 et 0,1% de jaune E 110 pour la figure 10.

Malgré une moindre efficacité de l'effet de barrière aux UV que ce qui est obtenu avec l'ortho-vanilline, l'aldéhyde syringique sera aussi préféré lorsque la stabilité thermique du matériau sera recherchée. En effet l'aldéhyde syringique a un point de fusion et d'ébullition beaucoup plus élevé que celui de l'orthovanilline.

La présente invention n'est pas limitée aux exemples de réalisation qui sont décrits ci-dessus à titre non exhaustif. Il revient à l'homme du métier de déterminer pour chaque application concernée la concentration ou la quantité de vanilline ou de son dérivé et éventuellement l'additif complémentaire qui est nécessaire dans le matériau plastique pour l'obtention de l'effet de barrière aux UV caractéristique de cette invention.

Le matériau plastique, auquel est ajouté la vanilline ou l'un de ses dérivés, peut être un autre matériau que le polypropylène , par exemple du polyamide, du polyester, de l'acétate de cellulose, du polychlorure de vinyle, du polyéthylène ou tout autre produit dont la température et le temps de fusion sont tels qu'ils autorisent la mise en oeuvre de la vanilline ou l'un de ses dérivés sans altération significative de leurs propriétés.

Comme autres dérivés de la vanilline, on peut également envisager notamment la métavanilline, l'aldéhyde vératrique, l'acide vanillique, l'acide isovanillique.

Comme autres additifs aptes à déplacer la zone de rupture d'absorption de la vanilline ou de ses dérivés vers le visible, on peut envisager toutes sortes de colorants, de teinte complémentaire au proche UV, par exemple le jaune E104, le rouge E 122, l'indigo E 132, le vert E 142, qui sont tous des colorants alimentaires et qui peuvent donc être utilisés lorsqu'il s'agit de réaliser un film d'emballage pour produits alimentaires.Le jaune et le rouge sont cependant préférés pour que le spectre modifié soit sans discontinuité vers le visible.

Des additifs minéraux peuvent aussi être utilisés pour obtenir le même effet, c'est-à-dire la modification du spectre de la vanilline ou de ses dérivés en déplaçant la zone de rupture d'absorption dans le visible. Il s'agit d'un additif minéral dont l'indice de réfraction est de préférence voisin de celui du matériau plastique, de manière à ne pas donner audit matériau un aspect opalescent ou laiteux. Cet additif se présente sous forme granulaire, avec une taille des grains, dans le mélange avec le matériau plastique, qui est du même ordre que la longueur d'onde à arrêter, c'est-à-dire de l'ordre de 380 à 400nm environ. Il est cependant possible de mettre en oeuvre un additif minéral ayant des grains unitaires de plus petite taille lorsque ceux-ci forment, dans le mélange avec le matériau plastique, des agglomérats de plusieurs grains unitaires, ces agglomérats étant sensiblement de la taille souhaitée, c'est-à-dire de l'ordre de 400nm. Par exemple, s'agissant du polypropylène ou du polyéthylène, on a obtenu l'effet recherché en ajoutant, comme additif, en plus de la vanilline ou l'un de ses dérivés, 2% d'une silice colloïdale, dont l'indice de réfraction est sensiblement le même que celui des matériaux plastiques précités et qui est constitué de très petites particules unitaires, de l'ordre de 12nm. Dans le mélange, ces particules se regroupent en agglomérats de taille inférieure au micromètre. On a pu constater un effet de barrière pour les longueurs d'onde de 400nm environ , ce qui illustre le déplacement dans le visible de la zone de rupture d'absorption.

## Revendications

1. Utilisation, dans un matériau plastique, de la vanilline et de ses dérivés pour produire un effet de barrière au rayonnement ultra-violet.

2. Utilisation de la vanilline et des ses dérivés, selon la revendication 1, en combinaison avec au moins un additif apte à modifier le spectre UV de ladite vanilline ou dudit dérivé, en déplaçant la zone de rupture d'absorption dans le visible.

3. Utilisation selon la revendication 2 caractérisée en ce que l'additif est un colorant alimentaire.

4. Utilisation selon la revendication 2 caractérisée en ce que l'additif est un additif minéral granulaire dont la taille des grains, dans le matériau plastique, est de l'ordre de grandeur de la longueur d'onde à absorber pour obtenir la modification du spectre UV de la vanilline ou de son dérivé.

5. Matériau plastique présentant un effet de barrière au rayonnement ultra-violet caractérisé en ce qu'il comporte d'une part, comme générateur de cet effet de barrière, au moins 0,1 % en poids de vanilline ou de l'un de ses dérivés, et d'autre part un additif apte à modifier le spectre UV de ladite vanilline ou dudit dérivé, en déplaçant la zone de rupture d'absorption dans le visible.

6. Matériau plastique selon la revendication 5 caractérisé en ce que l'additif est un colorant alimentaire.

7. Matériau plastique selon la revendication 5 caractérisé en ce que l'additif est un colorant jaune du type E 102 ou E 110 en proportion de l'ordre de 0,01 à 0,1% en poids.

8. Matériau plastique présentant un effet de barrière au rayonnement ultra-violet, notamment selon l'une des revendications 5 à 7 caractérisé en ce qu'il comporte, comme générateur de cet effet de barrière, au moins 0,1 % en poids d'orthovanilline.

9. Matériau plastique présentant un effet de barrière au rayonnement ultra-violet, notamment selon l'une des revendications 5 à 7, caractérisé en ce qu'il ne présente pas d'odeur et comporte, comme générateur de l'effet de barrière, au moins 0,1 % d'aldéhyde syringique.

10. Matériau plastique selon la revendication 5 caractérisé en ce que l'additif est un additif minéral granulaire dont la taille des grains est de l'ordre de grandeur de la longueur d'onde à absorber pour obtenir la modification du spectre UV de la vanilline ou de son dérivé.

11. Matériau plastique selon la revendication 10 caractérisé en ce que, étant à base de polypropylène ou de polyéthylène, l'additif est une silice colloïdale dont les grains unitaires dans ledit matériau plastique sont des agglomérats de taille inférieure au micromètre.

## Patentansprüche

1. Verwendung von Vanillin und seinen Derivaten in Kunststoffmaterialien zur Erzeugung einer Sperrwirkung gegen Ultraviolettstrahlung.

2. Verwendung von Vanillin und seinen Derivaten nach Anspruch 1 in Kombination mit mindestens einem Additiv, das befähigt ist, das UV-Spektrum des Vanillins oder Vanillinderivats so zu modifizieren, daß der Bereich des Abbruchs der Absorption in den sichtbaren Bereich verschoben wird.

3. Verwendung nach Anspruch 2, dadurch gekennzeichnet, daß das Additiv ein Lebensmittelfarbstoff ist.

4. Verwendung nach Anspruch 2, dadurch gekennzeichnet, daß das Additiv ein kornförmiges anorganisches Additiv ist, dessen Korngröße im Kunststoffmaterial in der Größenordnung der zu absorbierenden Wellenlänge liegt, um die Modifizierung des UV-Spektrums des Vanillins oder Vanillinderivats zu erzielen.

5. Kunststoffmaterial mit Sperrwirkung gegen Ultraviolettstrahlung, dadurch gekennzeichnet, daß es zum einen als Mittel zur Erzeugung dieser Sperrwirkung mindestens 0,1 Gew.-% Vanillin oder eines seiner Derivate und zum anderen ein Additiv enthält, das befähigt ist, das UV-Spektrum des Vanillins oder Vanillinderivats so zu modifizieren, daß der Bereich des Abbruchs der Absorption in den sichtbaren Bereich verschoben wird.

6. Kunststoffmaterial nach Anspruch 5, dadurch gekennzeichnet, daß das Additiv ein Lebensmittelfarbstoff ist.

7. Kunststoffmaterial nach Anspruch 5, dadurch gekennzeichnet, daß das Additiv ein gelber Farbstoff vom Typ E 102 oder E 110 in einem Mengenanteil von größenordnungsmäßig 0,01 bis 0,1 Gew.-% ist.

8. Kunststoffmaterial mit Sperrwirkung gegen Ultraviolettstrahlung, insbesondere nach einem der Ansprüche 5 bis 7, dadurch gekennzeichent, daß es als Mittel zur Erzeugung dieser Sperrwirkung mindestens 0,1 Gew.-% Orthovanillin enthält.

9. Kunststoffmaterial mit Sperrwirkung gegen Ultraviolettstrahlung, insbesondere nach einem der Ansprüche 5 bis 7, dadurch gekennzeichnet, daß es geruchlos ist und als Mittel zur Erzeugung der Sperrwirkung mindestens 0,1 % Syringaaldehyd enthält.

10. Kunststoffmaterial nach Anspruch 5, dadurch gekennzeichnet, daß das Additiv ein kornförmiges anorganisches Additiv ist, dessen Korngröße in der Größenordnung der zu absorbierenden Wellenlänge liegt, um die Modifizierung des UV-Spektrums des Vanillins oder Vanillinderivats zu erzielen.

11. Kunststoffmaterial nach Anspruch 10, dadurch gekennzechnet, daß es ein Kunststoffmaterial auf der Basis von Polypropylen oder Polyethylen ist und das Additiv eine kolloidale Kieselsäure darstellt, deren Einheitskörner im Kunststoffmaterial Agglomerate mit einer Korngröße von weniger als einem Mikrometer bilden.

## Claims

1. The use in a plastic material, of vanillin and its derivatives for producing a barrier effect against ultraviolet radiations.

2. The use of vanillin and its derivatives according to claim 1, in combination with at least one additive capable of modifying the UV spectrum of said vanillin or said derivative, by displacing the no-absorption zone into the visible.

3. The use according to claim 2, characterised in that the additive is a food color.

4. The use according to claim 2, characterised in that the additive is a granular mineral additive whose granule size, in the plastic material, is of the order of magnitude of the wavelength to be absorbed so as to obtain the modification of the UV spectrum of vanillin or its derivative.

5. A plastic material having a barrier effect against ultraviolet radiations, characterised in that said material includes, on the one hand, as generator of said barrier effect, at least 0.1% by weight of vanillin or of one of its derivatives and, on the other hand, an additive capable of modifying the UV spectrum of said vanillin or of said derivative, by displacing the no-absorption zone into the visible.

6. The plastic material according to claim 5, characterised in that the additive is a food color.

7. The plastic material according to claim 5, characterised in that the additive is a yellow color of the type E 102 or E 110 used in the proportions of 0.01 to 0.1% by weight.

8. The plastic material having a barrier effect against ultraviolet radiations, in particular according to one of claims 5 to 7, characterised in that said material includes, as generator of said barrier effect, at least 0.1% of ortho-vanillin.

9. The plastic material having a barrier effect against ultraviolet radiations, in particular according to one of claims 5 to 7, characterised in that said material is odorless and includes, as generator of said barrier effect, at least 0.1% of syringic aldehyde.

10. The plastic material according to claim 5, characterised in that the additive is a granular mineral additive whose granule size is of the order of magnitude of the wavelength to be absorbed so as to obtain the modification of the UV spectrum of vanillin or of its derivative .

11. The plastic material according to claim 10, characterised in that said material containing polypropylene or polyethylene, the additive is a colloidal silica whose unitary granules in said plastic material are clusters of size less than one µm.
